# EUROPÄISCHE PATENTSCHRIFT

(11) **EP 1 212 860 B1**
(45) Veröffentlichungstag und Bekanntmachung des Hinweises auf die Patenterteilung: **19.04.2006**
(21) Anmeldenummer: 00974299.0
(22) Anmeldetag: 07.09.2000
(51) Int. Cl.: H04J 3/06, G06F 1/14

(54) **ANORDNUNG ZUM SYNCHRONISIEREN VON ÜBER EIN KOMMUNIKATIONSNETZ GEKOPPELTEN KOMMUNIKATIONSSYSTEMKOMPONENTEN**
ARRANGEMENT FOR SYNCHRONIZING COMMUNICATION SYSTEM COMPONENTS COUPLED VIA A COMMUNICATION NETWORK
DISPOSITIF DE SYNCHRONISATION DE COMPOSANTS DE SYSTEME DE COMMUNICATION COUPLES PAR L'INTERMEDIAIRE D'UN RESEAU DE COMMUNICATION

(30) Priorität: 13.09.1999 DE 19943779
(43) Veröffentlichungstag der Anmeldung: 12.06.2002
(73) Patentinhaber: SIEMENS AKTIENGESELLSCHAFT, 80333 München (DE)
(72) Erfinder: HEITMANN, Jürgen, 82061 Neuried (DE)
(86) Internationale Anmeldenummer: PCT/DE2000/003105
(87) Internationale Veröffentlichungsnummer: WO 2001/020827

(56) Entgegenhaltungen:
- EP-A- 0 350 149
- EP-A- 0 697 774
- EP-A- 0 722 233
- US-A- 5 822 317
- MILLS D L: "IMPROVED ALGORITHMS FOR SYNCHRONIZING COMPUTER NETWORK CLOCKS" COMPUTER COMMUNICATIONS REVIEW,US,ASSOCIATION FOR COMPUTING MACHINERY. NEW YORK, Bd. 24, Nr. 4, 1. Oktober 1994 (1994-10-01), Seiten 317-327, XP000477058 ISSN: 0146-4833

## Beschreibung

Im Zuge einer gegenwärtigen stattfindenden Entwicklung werden Kommunikationssysteme und deren Steuerung zunehmend dezentralisiert. Ein Kommunikationssystem wird dazu in einzelne Teilsysteme aufgeteilt, die über ein Kommunikationsnetz, wie z.B. ein Lokales Netz (LAN) oder ein auf einem Internetprotokoll (IP) basierendes Netz gekoppelt werden. Auf diese Weise können beispielsweise Komponenten einer größeren Vermittlungseinrichtung über ein Kommunikationsnetz verteilt werden.

Zeitgemäße Kommunikationssysteme stellen üblicherweise eine Vielzahl von Kommunikationsdiensten und Leistungsmerkmalen bereit. Für einen Teil dieser Kommunikationsdienste bzw. Leistungsmerkmale, wie z.B. für sog. CBO-Dienste (continuous bit stream operation), wozu Fax-, Modem-, Sprach- und Videoübertragungen zählen, ist es erforderlich, daß die jeweils daran beteiligten Kommunikationssystemkomponenten bezüglich zu übermittelnder Kommunikationsdaten synchron sind.

Systeme zum Synchronisieren von über ein Kommunikationsnetz gekoppelten Kommunikationssystemkomponenten sind bei Kommunikationsnetzen mit direkter SDH- (synchronous digital hierarchy) oder PDH-basierter (plesiochronous digital hierarchy) Übertragung, z.B. aus Kap. 8 der ITU-T Empfehlung G.803 und den darin angegebenen Referenzen, bekannt. Dabei wird den zu synchronisierenden Kommunikationssystemkomponenten ein Referenztakt auf der physikalischen Schicht des verwendeten Übertragungsprotokolls übermittelt. Eine Übertragung eines Referenztaktes in der physikalischen Schicht erfordert allerdings durchgehende Schicht-1-Verbindungen zu den einzelnen Kommunikationssystemkomponenten. Komplexere Kommunikationsnetzstrukturen sind damit jedoch nur mit großem Aufwand zu realisieren. Bei flexibler konfigurierbaren Kommunikationsnetzen, wie z.B. Lokalen Netzen (LAN) oder internetprotokollbasierten Netzen, werden durchgehende Schicht-1-Verbindungen in der Regel nicht bereitgestellt.

Aus der Druckschrift US 5822317 ist ein System bekannt, bei dem ein Sender von Datenpaketen mit einem Empfänger von Datenpaketen dadurch synchronisiert wird, dass die zu übertragenden Datenpakete durch den Sender jeweils mit einem Zeitstempel versehen werden, der vom Empfänger ausgelesen wird, um abhängig davon einen Zeitgeber des Empfängers nachzuregeln. Zum Einsetzen eines solchen Zeitstempels ist jedoch häufig eine Modifikation von üblicherweise verwendeten Kommunikationsprotokollen erforderlich, was die Einsatzmöglichkeiten eines solchen Systems einschränkt.

Es ist Aufgabe der vorliegenden Erfindung eine gegenüber dem Stand der Technik flexibleres System anzugeben, um über ein Kommunikationsnetz gekoppelte Kommunikationssystemkomponenten hinsichtlich von zu übertragenden Kommunikationsdaten zu synchronisieren.

Gelöst wird diese Aufgabe durch ein System mit den Merkmalen des Patentanspruchs 1.

Zum Synchronisieren von über ein Kommunikationsnetz gekoppelten Kommunikationssystemkomponenten werden diesen Zeitinformationen von einem Zeitinformationsgeber übermittelt. Indem die Kommunikationssystemkomponenten ein jeweils eigenes Zeitmaß an einer jeweiligen vom Zeitinformationsgeber empfangenen Zeitinformation ausrichten, werden diese Kommunikationssystemkomponenten zueinander synchronisiert.

Die Synchronisierung einer Kommunikationssystemkomponente erfolgt durch Nachregeln der Taktfrequenz eines Zeittaktgebers, der dazu bestimmt ist, die Übertragungsdatenrate für Kommunikationsdaten vorzugeben, an deren Übertragung die betreffende Kommunikationssystemkomponente beteiligt ist. Die Nachrege lung der Taktfrequenz erfolgt dabei anhand eines Vergleichs einer empfangenen Zeitinformation mit einem aktuellen Zeitwert einer Echtzeituhr, die erfindungsgemäß durch einen Zeittakt des eigentlich zum Vorgeben der Übertragungsdatenrate für zu übertragende Kommunikationsdaten vorgesehenen Zeittaktgebers zeitlich gesteuert wird. Über das Nachregeln der Taktfrequenz des Zeittaktgebers wird damit die Echtzeituhr selbst auf indirekte Weise anhand der empfangenen Zeitinformation justiert. Durch diese indirekte Justierung werden abrupte Änderungen der von der Echtzeituhr angegebenen Zeit vermieden und Auswirkungen von Laufzeitschwankungen empfangener Zeitinformationen abgedämpft.

Die erfindungsgemäße Anordnung ist weitgehend unabhängig von der Art des die Kommunikationssystemkomponenten koppelnden Kommunikationsnetzes. So können z.B. als Kommunikationsnetz ein sog. Lokales Netz (LAN) oder ein internetprotokollbasiertes Kommunikationsnetz verwendet werden.

Vorteilhafte Ausführungsformen und Weiterbildungen der Erfindung sind in den Unteransprüchen angegeben.

Nach einer vorteilhaften Ausführungsform der Erfindung kann der Zeittaktgeber einer Kommunikationssystemkomponente temperaturstabilisiert oder temperaturkompensiert sein. Zur Erhöhung der Zeittaktgenauigkeit kann der Zeittaktgeber auch nach dem sog. 2-Oszillatorkonzept realisiert sein. Hierbei ist ein Arbeitsoszillator und ein temperaturstabilisierter oder temperaturkompensierter, die Taktfrequenz des Arbeitsoszillators regelnder und ansonsten freilaufender Referenzoszillator vorgesehen. Je genauer der Zeittaktgeber einer Kommunikationssystemkomponente ist, über desto längere Zeitintervalle bleibt die betreffende Kommunikationssystemkomponente auch ohne Empfang einer Zeitinformation synchron.

Nach einer weiteren vorteilhaften Ausführungsform der Erfindung kann einer Kommunikationssystemkomponente die Zeitinformation drahtlos, z.B. von einem GPS-Satelliten (global positioning system), einem Zeitzeichensender wie DCF77 oder einem zum Kommunikationssystem gehörigen Zeitinformationssender, übermittelt werden. Die Zeitinformations-Empfangseinrichtung der betreffenden Kommunikationssystemkomponente weist zu diesem Zweck eine Funkempfangseinrichtung zum drahtlosen Empfangen der Zeitinformation auf. Aufgrund der sehr kurzen Laufzeit einer per Funk übertragenen Zeitinformation läßt sich auf diese Weise eine sehr genaue Synchronisierung erzielen.

Alternativ dazu kann einer Kommunikationssystemkomponente eine Zeitinformation auch über das Kommunikationsnetz von einem ebenfalls an das Kommunikationsnetz gekoppelten Zeitinformationsgeber, z.B. in Form eines Zeitinformationsservers, übermittelt werden. Auf diese Weise kann eine bestehende Netzwerkinfrastruktur auch für die Synchronisierung der Kommunikationssystemkomponenten genutzt werden. Bei dieser Alternative kann eine aufwendige Funkempfangseinrichtung in den zu synchronisierenden Kommunikationssystemkomponenten entfallen. Der Empfang einer Zeitinformation läßt sich statt dessen auf einfache Weise dadurch realisieren, daß die Zeitinformations-Empfangseinrichtung einer Kommunikationssystemkomponente über eine Netzwerkschnittstelle an das Kommunikationsnetz gekoppelt wird und über Mittel verfügt, um eine Zeitinformation aus einem über das Kommunikationsnetz übermittelten Datenstrom zu extrahieren.

Nach einer vorteilhaften Weiterbildung der Erfindung kann eine Kommunikationssystemkomponente eine Zeitabfrageeinrichtung aufweisen, um damit eine Zeitinformation über das Kommunikationsnetz vom Zeitinformationsgeber anzufordern. Die Anforderung kann dabei vorzugsweise über bekannte Netzwerkprotoko-11e, wie z.B. das sog. "network time protocol" (NTP) oder das sog. "digital time synchronization protocol" (DTSS), erfolgen.

Zur Verbesserung der Synchronisierungsgenauigkeit kann eine Kommunikationssystemkomponente über eine Zeitmeßeinrichtung zum Messen der Zeitdifferenz zwischen Anforderung und Empfang einer Zeitinformation und über eine Laufzeitbestimmungseinrichtung zum Ermitteln eines Schätzwertes für die Laufzeit der Zeitinformation vom Zeitinformationsgeber zur Kommunikationssystemkomponente anhand der gemessenen Zeitdifferenz verfügen. Unter der Annahme, daß die Laufzeit der Anforderung annähernd mit der Laufzeit der Zeitinformation übereinstimmt, ergibt sich die Laufzeit der Zeitinformation dabei als die Hälfte der gemessenen Zeitdifferenz. Die Genauigkeit des Schätzwertes für die Laufzeit einer Zeitinformation kann erhöht werden, indem der Schätzwert aus einem Mittelwert von im Rahmen mehrerer Anfragen gemessenen Zeitdifferenzen oder daraus abgeleiteten Größen bestimmt wird. Auf diese Weise können Laufzeitschwankungen der über das Kommunikationsnetz übertragenen Daten ausgeglichen werden. Die Vergleichseinrichtung der Kommunikationssystemkomponente kann entsprechend so ausgestaltet werden, daß der ermittelte Schätzwert für die Laufzeit der Zeitinformation beim Vergleichsergebnis, z.B. durch Korrektur der Zeitinformation oder des von der Echtzeituhr angegebenen Zeitwertes, berücksichtigt wird.

Die Häufigkeit mit der Zeitinformationen von einer Kommunikationssystemkomponente angefordert werden, kann sich nach unterschiedlichen Kriterien richten, so z.B. nach der Genauigkeit des Zeittaktgebers, nach der Variationsbreite der zwischen Anfrage und Empfang von Zeitinformationen gemessenen Zeitdifferenzen und/oder nach der Größe eines bei einem vorhergehenden Justieren des Zeittaktgebers festgestellten Fehlstandes des Zeittaktgebers. Vorzugsweise kann die Zeitabfrageeinrichtung so ausgestaltet sein, daß Zeitinformationen um so häufiger angefordert werden, je geringer die Genauigkeit des Zeittaktgebers und je größer die Variationsbreite der gemessenen Zeitdifferenzen bzw. der festgestellte Fehlstand des Zeittaktgebers ist.

Nach einer weiteren vorteilhaften Weiterbildung der Erfindung kann eine Kommunikationssystemkomponente einen nach dem Durchlaufprinzip ("first-in-first-out", FIFO) arbeitenden Eingangspufferspeicher zum Puffern eines über das Kommunikationsnetz empfangenen Datenstroms aufweisen. Der Eingangspufferspeicher ist dabei in einer Weise mit dem Zeittaktgeber gekoppelt, daß Datenelemente eines gepufferten Datenstroms in einem durch den Zeittaktgeber bestimmten Zeittakt ausgelesen werden. An den Eingangspufferspeicher ist weiterhin eine Füllstandserfassungseinrichtung angekoppelt, mittels welcher der Füllstand des Eingangspufferspeichers erfaßt werden kann.

Mit Hilfe einer Taktfrequenzsteuerung kann sodann die Taktfrequenz des Zeittaktgebers in Abhängigkeit vom erfaßten Füllstand nachgeregelt werden. Unter der Voraussetzung, daß der über das Kommunikationsnetz empfangene Datenstrom zumindest im zeitlichen Mittel mit einer durch einen Taktgeber eines jeweiligen Datenstromsenders vorgegebenen Datenrate gesendet wird, kann so der Zeittaktgeber der Kommunikationssystemkomponente mit dem Taktgeber des Datenstromsenders im zeitlichen Mittel synchronisiert werden. Um kurzfristige Laufzeitschwankungen von Datenelementen des Datenstroms auszugleichen, kann ein Integrierglied vorgesehen sein, über das ein aus dem Füllstand abgeleitetes Taktfrequenzregelungssignal dem Zeittaktgeber zugeleitet wird.

Zur Taktfrequenzregelung kann vorzugsweise ein Datenstrom von über das Kommunikationsnetz empfangenen Kommunikationsdaten, wie z.B. Sprachdaten, genutzt werden. Da Kommunikationsdaten und insbesondere Sprachdaten bei bestehender Verbindung häufig mit einer genau eingehaltenen, am Zeittakt des Senders der Kommunikationsdaten orientierten Übertragungsrate gesendet werden, läßt sich die Taktfrequenz des Zeittaktgebers anhand empfangener Kommunikations- bzw. Sprachdaten besonders genau stabilisieren.

Gemäß einer weiteren vorteilhaften Weiterbildung kann der Zeitinformationsgeber über eine Detektoreinrichtung verfügen, mit der ein temporär geringes Übertragungsaufkommen, z.B. von Nutz- und/oder Signalisierungsdaten, im Kommunikationsnetz festgestellt werden kann. Mittels einer Übertragungssteuerung des Zeitinformationsgebers kann sodann eine Übertragung einer Zeitinformation ausgelöst werden, wenn das festgestellte Übertragungsaufkommen eine vorgegebene Schranke unterschreitet.

Ein Ausführungsbeispiel der Erfindung wird nachfolgend anhand der Zeichnung näher erläutert.

Dabei zeigen jeweils in schematischer Darstellung
- FIG 1: ein Kommunikationssystem mit einer über ein Kommunikationsnetz verteilten Vermittlungseinrichtung und
- FIG 2: eine Endgeräteanschlußgruppe der verteilten Vermittlungseinrichtung.

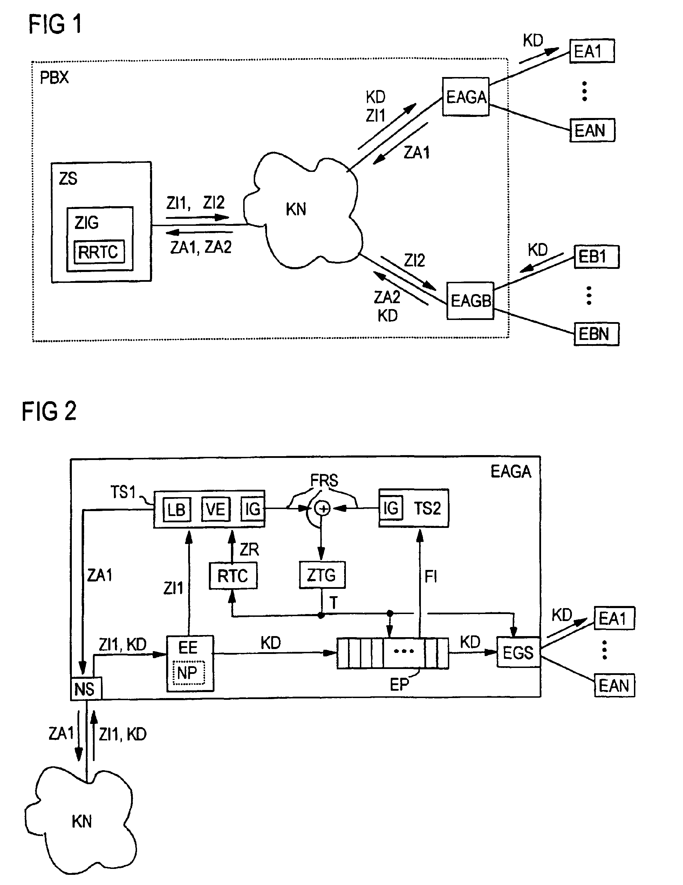

In FIG 1 ist ein Kommunikationssystem mit einer über ein Kommunikationsnetz KN verteilten Vermittlungseinrichtung PBX und daran angeschlossenen Endgeräten EA1,...,EAN, und EB1,...,EBN schematisch dargestellt. Die Vermittlungseinrichtung PBX weist dabei als über das Kommunikationsnetz KN gekoppelte Kommunikationssystemkomponenten eine zentrale Steuerung ZS sowie Endgeräteanschlußgruppen EAGA und EAGB auf. Letztere gehören zum sogenannten peripheren Teil der Vermittlungseinrichtung PBX. Über die Endgeräteanschlußgruppe EAGA sind die Endgeräte EA1,...,EAN und über die Endgeräteanschlußgruppe EAGB die Endgeräte EB1,...,EBN an die Vermittlungseinrichtung PBX gekoppelt. Die zentrale Steuerung ZS verfügt ihrerseits über einen Zeitinformationsgeber ZIG mit einer Referenzechtzeituhr RRTC. Die Referenzechtzeituhr RRTC kann beispielsweise mittels eines GPS(global positioning system)-Empfängers anhand einer von einem Satelliten empfangenen Weltzeitinformation justiert werden.

An das Kommunikationsnetz KN, das z.B. als Lokales Netz (LAN) oder als internetprotokollbasiertes Netzwerk realisiert sein kann, können neben den Kommunikationssystemkomponenten ZS, EAGA, EAGB auch Datenverarbeitungseinrichtungen (nicht dargestellt) angekoppelt sein. Ein als Lokales Netz (LAN) oder internetprotokollbasiertes Netzwerk realisiertes Kommunikationsnetz läßt sich auf sehr einfache Weise erweitern und um weitere Kommunikations- und/oder Datenverarbeitungseinrichtungen ergänzen und somit sehr flexibel auch unterschiedlichsten Anforderungen anpassen. Im vorliegenden Ausführungsbeispiel dient das Kommunikationsnetz KN zum Übertragen sowohl aller Kommunikationsdaten als auch aller Steuerdaten zwischen den Endgeräteanschlußgruppen EAGA, EAGB und der zentralen Steuerung ZS.

Im vorliegenden Ausführungsbeispiel werden im Rahmen einer bestehenden Verbindung Kommunikationsdaten KD, wie z.B. Sprachdaten, vom Endgerät EB1 über die Endgeräteanschlußgruppe EAGA, das Kommunikationsnetz KN und die Endgeräteanschlußgruppe EAGB zum Endgerät EA1 übertragen. Der Aufbau der Verbindung wurde vorher durch die zentrale Steuerung ZS veranlaßt, indem den Endgeräteanschlußgruppen EAGA, EAGB unter anderem jeweils eine die jeweils andere Endgeräteanschlußgruppe im Kommunikationsnetz KN identifizierende Adreßinformation übermittelt wurde. Entsprechend werden die zu übertragenden Kommunikationsdaten KD durch die Endgeräteanschlußgruppe EAGB mit der die Endgeräteanschlußgruppe EAGA identifizierenden Adressinformation versehen und so über das Kommunikationsnetz KN zur Endgeräteanschlußgruppe EAGA übertragen, die die Kommunikationsdaten KD schließlich zum Endgerät EA1 weiterleitet.

Um die Endgeräteanschlußgruppen EAGA und EAGB zueinander zu synchronisieren, wird jede der Endgeräteanschlußgruppen EAGA und EAGB für sich mit dem Zeitinformationsgeber ZIG der zentralen Steuerung ZS synchronisiert. Die Synchronisierung erfolgt dabei über das Kommunikationsnetz KN. Die Endgeräteanschlußgruppen EAGA und EAGB senden dazu jeweils eine Zeitanforderungsmeldung ZA1 bzw. ZA2, z.B. gemäß dem sog. "network time protocol" (NTP), über das Kommunikationsnetz KN zum Zeitinformationsgeber ZIG. Dieser wird durch die empfangenen Zeitanforderungsmeldungen ZA1, ZA2 dazu veranlaßt, jeweils eine aktuelle Zeitinformation ZI1 bzw. ZI2 von der Referenzechtzeituhr RRTC abzufragen und anschließend mit einer die der Endgeräteanschlußgruppe EAGA bzw. EAGB identifizierenden Adressinformation versehen über das Kommunikationsnetz KN zu der jeweils adressierten Endgeräteanschlußgruppe EAGA bzw. EAGB zu übertragen.

FIG 2 zeigt die Endgeräteanschlußgruppe EAGA in detaillierterer Darstellung. Die Endgeräteanschlußgruppe EAGA, die über eine Netzwerkschnittstelle NS an das Kommunikationsnetz KN gekoppelt ist, weist als weitere Funktionskomponenten eine Empfangseinrichtung EE, einen Eingangspufferspeicher EP, eine Echtzeituhr RTC, einen Zeittaktgeber ZTG, zwei Taktfrequenzsteuerungen TS1 und TS2 sowie eine Endgeräteschnittstelle EGS auf. Über die Endgeräteschnittstelle EGS, die z.B. als eine Reihe von S₀-Schnittstellen gemäß ISDN-Standard realisiert sein kann, sind die Endgeräte EA1,...,EAN angeschlossen. Die Taktfrequenzsteuerung TS1 verfügt ihrerseits über eine Vergleichseinrichtung VE, eine Laufzeitbestimmungseinrichtung LB, sowie ein Integrierglied IG. Aus Gründen der Übersichtlichkeit sind weitere, zum Verständnis der Erfindung nicht unmittelbar beitragende Funktionskomponenten der Endgeräteanschlußgruppe EAGA nicht dargestellt. Die dargestellten Funktionskomponenten können jeweils auch mit Hilfe von Softwaremodulen realisiert sein, die auf einem Systemprozessor der Endgeräteanschlußgruppe EAGA ablaufen.

Der Zeittaktgeber ZTG, der beispielsweise als sog. TCXO (temperature compensated x-tal oscillator), OCXO (oven controlled x-tal oscillator) oder TCVCXO (temperature compensated voltage controlled x-tal oscillator) realisiert sein kann, stellt ein Taktsignal T bereit, das der Echtzeituhr RTC, dem Eingangspufferspeicher EP und der Endgeräteschnittstelle EGS zur zeitlichen Steuerung zugeführt wird. Die Frequenz des Taktsignals T des Zeittaktgebers ZTG ist dabei in vorgegebenen Grenzen regelbar. Das Taktsignal T bildet sowohl die Zeitbasis für die Echtzeituhr RTC als auch die Zeitbasis für die Datenrate, mit der die Kommunikationsdaten KD über die Endgeräteschnittstelle EGS übertragen werden - z.B. 64 kbit/s bei einem ISDN-Basiskanal.

Zur Synchronisierung des Zeittaktgebers ZTG mit dem Zeitmaß des Zeitinformationsgebers ZIG, sendet die Taktfrequenzsteuerung TS1 über die Netzschnittstelle NS die Zeitanforderungsmeldung ZA1 über das Kommunikationsnetz KN zum Zeitinformationsgeber ZIG. Als Absendezeitpunkt der Zeitanforderungsmeldung ZA1 wird ein von der Echtzeituhr RTC angegebener aktuellen Zeitwert gespeichert. Durch die Zeitanforderungsmeldung ZA1 wird der Zeitinformationsgeber ZIG, wie oben bereits ausgeführt, dazu veranlaßt, die Zeitinformation ZI1 über das Kommunikationsnetz KN zur Endgeräteanschlußgruppe EAGA zu übertragen. Die Zeitinformation ZI1 wird von der Netzschnittstelle NS der Endgeräteanschlußgruppe EAGA zur Empfangseinrichtung EE weitergeleitet, wo die Zeitinformation ZI1 aus einem über das Kommunikationsnetz KN empfangenen auch die Kommunikationsdaten KD enthaltenden Datenstrom extrahiert wird. Die Extraktion der Zeitinformation ZI1 erfolgt in der Empfangseinrichtung EE mittels eines zu diesem Zweck implementierten Netzwerkprotokoll-Softwaremoduls NP, durch das die Zeitinformation ZI1 anhand einer eine Zeitinformation kennzeichnenden Identifizierungsinformation erkannt wird. Dies kann beispielsweise gemäß dem "network time protocol" (NTP) oder dem "digital time synchronization protocol" (DTSS) erfolgen. Die extrahierte Zeitinformation ZI1 wird von der Empfangseinrichtung EE zur Taktfrequenzsteuerung TS1 weitergeleitet, durch die der Empfangszeitpunkt der Zeitinformation ZI1 als der aktuelle von der Echtzeituhr RTC angegebene Zeitwert ZR bestimmt wird und der Zeitinformationsinhalt der Zeitinformation ZI1 ausgewertet wird. Sofern für die Endgeräteanschlußgruppe EAGA eine lokale Zeit maßgeblich ist, kann der Zeitinformationsinhalt der Zeitinformation ZI1 z.B. anhand von gespeicherten Tabellen auf die lokal maßgebliche Zeit umgerechnet werden. Eine solche Umrechnung kann beispielsweise erforderlich sein, wenn die Endgeräteanschlußgruppe EAGA und der Zeitinformationsgeber ZIG sich in unterschiedlichen Zeitzonen befinden oder sich an unterschiedlichen Referenzzeiten, wie z.B. GPS-Zeit (global positioning system) und UTC-Zeit (universal time coordinated), orientieren.

Durch die Laufzeitbestimmungseinrichtung LB wird weiterhin die Laufzeit der Zeitinformation ZI1 im Kommunikationsnetz KN als die Hälfte der Zeitdifferenz zwischen dem festgestellten Empfangszeitpunkt ZR der Zeitinformation ZI1 und dem gespeicherten Absendezeitpunkt der Zeitanforderungsmeldung ZA1 abgeschätzt. Zur Erhöhung der Genauigkeit der Laufzeitbestimmung und zum Ausgleich kurzfristiger Laufzeitschwankungen im Kommunikationsnetz KN wird der für die Laufzeit erhaltene Wert mit früher bestimmten Werten für die Laufzeit gemittelt. Vorzugsweise wird ein gleitender Mittelwert bestimmt. Gegebenenfalls kann auch ein Zeitstempel der Zeitinformation ZI1 in die Laufzeitbestimmung einbezogen werden.

Die durch den Zeitinformationsinhalt der Zeitinformation ZI1 angegebene und ggf. an die lokal maßgebliche Zeit angepaßte Zeitangabe sowie der für die Laufzeit bestimmte Wert werden sodann der Vergleichseinrichtung VE zugeführt. Durch die Vergleichseinrichtung VE wird die übermittelte Zeitangabe um den für die Laufzeit der Zeitinformation ZI1 erhaltenen Wert, z.B. durch Addition beider Größen, korrigiert. Die korrigierte Zeitangabe wird daraufhin durch die Vergleichseinrichtung VE mit der von der Echtzeituhr RTC zum Empfangszeitpunkt der Zeitinformation ZI1 angegebenen Zeit ZR verglichen. Abhängig vom Vergleichsergebnis wird sodann ein Frequenzregelungssignal FRS zur Steuerung der Taktfrequenz des Zeittaktgebers ZTG gebildet. Sofern die von der Echtzeituhr RTC angegebene Zeit der von der Zeitinformation ZI1 abgeleiteten, korrigierten Zeitangabe vorauseilt, wird dabei ein Frequenzregelungssignal FRS zur Verringerung der Taktfrequenz des Zeittaktgebers ZTG gebildet. Entsprechend wird bei Nacheilen der Echtzeituhr RTC ein Frequenzregelungssignal FRS zur Erhöhung der Taktfrequenz erzeugt. Das Frequenzregelungssignal FRS wird von der Taktfrequenzsteuerung TS1 über das zeitliche Integrierglied IG ausgegeben, dessen Zeitkonstante so bemessen ist, daß im Kommunikationsnetz KN typischerweise auftretende Laufzeitschwankungen ausgeglichen werden. Vorzugsweise können durch die Taktfrequenzsteuerung TS1 bei Auftreten vergleichsweise großer Abweichungen zwischen der Echtzeituhr RTC und der von der Zeitinformation ZI1 abgeleiteten Zeitangabe, Zeitinformationen in kürzeren Zeitabständen vom Zeitinformationsgeber ZIG angefordert werden. Weiterhin kann eine maximale Abweichung zwischen Echtzeituhr RTC und einer von einer empfangenen Zeitinformation abgeleiteten Zeitangabe vorgegeben werden, bei deren Überschreiten die Echtzeituhr RTC direkt, d.h. durch Verändern der von ihr angegebenen Zeit, nachgestellt wird.

In den Zeitintervallen zwischen einem jeweiligen Empfang einer Zeitinformation wird die Taktfrequenz des Zeittaktgebers ZTG mit Hilfe der ebenfalls über das Kommunikationsnetz KN empfangenen Kommunikationsdaten KD stabilisiert. Die Kommunikationsdaten KD werden dazu von der Empfängereinrichtung EE dem Eingang des Eingangspufferspeichers EP zugeführt. Dieser ist als sog. Durchlaufspeicher realisiert, aus dem zwischengespeicherte Daten in der zeitlichen Reihenfolge ihres Einspeicherns ausgelesen werden. Ein Durchlaufspeicher wird häufig auch als "first-in-first-out"-Speicher oder FIFO bezeichnet. Die im Eingangspufferspeicher EP zwischengespeicherten Kommunikationsdaten KD werden aus diesem nach Maßgabe des vom Zeittaktgeber ZTG zugeführten Taktsignals T ausgelesen und der Endgeräteschnittstelle EGS zugeführt. Über diese werden die Kommunikationsdaten KD schließlich zum Endgerät EA1 übertragen.

In der Regel werden Kommunikationsdaten und insbesondere Sprachdaten mit konstanter, streng am Zeittakt des Senders der Kommunikationsdaten orientierter Datenrate gesendet. Trotz evtl. Laufzeitschwankungen, denen solche mit konstanter Datenrate gesendete Kommunikationsdaten unterliegen, treffen diese Kommunikationsdaten bei einem Empfänger zumindest im zeitlichen Mittel mit derselben Datenrate ein. Das zeitliche Mittel der Datenrate empfangener Kommunikationsdaten kann somit genutzt werden, einen Empfänger dieser Kommunikationsdaten mit dem Zeittakt des Senders zu synchronisieren.

Im vorliegenden Ausführungsbeispiel werden die mit konstanter Datenrate von der Endgeräteanschlußgruppe EAGB über das Kommunikationsnetz KN zur Endgeräteanschlußgruppe EAGA gesendeten Kommunikationsdaten KD dazu verwendet, die Taktfrequenz des Zeittaktgebers ZTG der Endgeräteanschlußgruppe EAGA während der Zeitintervalle zwischen einzelnen Abfragen von Zeitinformationen zu stabilisieren. In der Endgeräteanschlußgruppe EAGA wird zu diesem Zweck in regelmäßigen Zeitabständen der jeweils aktuelle Füllstand des Eingangspufferspeichers EP, d.h. die Grenze bis zu der der Eingangspufferspeicher EP mit Kommunikationsdaten KD angefüllt ist, erfaßt und in Form einer Füllstandsinformation FI zur Taktfrequenzsteuerung TS2 übertragen. Die Taktfrequenzsteuerung TS2 bildet abhängig von der Füllstandsinformation FI ein Frequenzregelungssignal FRS, das über ein Integrierglied IG ausgegeben und mit dem von der Taktfrequenzsteuerung TS1 gebildeten Frequenzregelungssignal zur Regelung der Taktfrequenz des Zeittaktgebers ZTG kombiniert wird. Die Zeitkonstante des Integriergliedes IG der Taktfrequenzsteuerung TS2 ist so bemessen, daß im Kommunikationsnetz KN typischerweise auftretende Laufzeitschwankungen der Kommunikationsdaten KD ausgeglichen werden. Die Integrierglieder IG der Taktfrequenzsteuerungen TS1 und TS2 können beispielsweise mit Hilfe einer Digitalschaltung zur Bildung gleitender Mittelwerte realisiert sein. Bei überdurchschnittlich hohem Füllstand des Eingangspufferspeichers EP wird von der Taktfrequenzsteuerung TS2 ein Frequenzregelungssignal FRS zur Erhöhung der Taktfrequenz des Zeittaktgebers ZTG gebildet während bei unterdurchschnittlichem Füllstand ein Frequenzregelungssignal zur Verringerung der Taktfrequenz gebildet wird. Die von den Zeittaktsteuerungen TS1 und TS2 gebildeten Frequenzregelungssignale FRS können jeweils mit vorgegebenen Gewichtsfaktoren kombiniert dem Zeittaktgeber ZTG zugeführt werden. Vorzugsweise erhält dabei das von der Taktfrequenzsteuerung TS1 gebildete Frequenzregelungssignal ein höheres Gewicht als das von der Taktfrequenzsteuerung TS2 gebildete. Aufgrund der zusätzlichen Stabilisierung der Taktfrequenz des Zeittaktgebers ZTG anhand des Füllstandes des Eingangspufferspeichers EP kann eine Synchronität zwischen den Endgeräteanschlußgruppen EAGA und EAGB auch während vergleichsweise langer Zeitintervalle zwischen einzelnen Zeitabfragen gewährleistet werden.

Um eine vorgegebene Synchronisierungsgenauigkeit der Endgeräteanschlußgruppen EAGA und EAGB auch über größere Kommunikationsnetze KN hinweg zu gewährleisten, können Netzwerkelemente des Kommunikationsnetzes, wie z.B. "repeater" und/oder "router", so angeordnet werden, daß die jeweilige Anzahl der zwischen den Zeitinformationsgeber ZIG und die jeweilige Endgeräteanschlußgruppe EAGA bzw. EAGB geschalteten und der zwischen die Endgeräteanschlußgruppen EAGA und EAGB geschalteten Netzwerkelemente eine jeweils vorgegebene Anzahl nicht überschreitet.

## Patentansprüche

1. System zum Synchronisieren von über ein Kommunikationsnetz (KN) gekoppelten Kommunikationssystemkomponenten (EAGA, EAGB) des Systems, mit
einem Zeitinformationsgeber (ZIG) zum Übertragen von Zeitinformationen (ZI1, ZI2) zu den Kommunikationssystemkomponenten (EAGA, EAGB), wobei die Kommunikationssystemkomponenten (EAGA, EAGB) jeweils aufweisen:
- eine Zeitinformations-Empfangseinrichtung (EE) zum Empfangen einer Zeitinformation vom Zeitinformationsgeber (ZIG),
- einen Zeittaktgeber (ZTG) mit steuerbarer Taktfrequenz zum Vorgeben einer Übertragungsdatenrate für zu übertragende Kommunikationsdaten (KD),
- eine durch den Zeittaktgeber (ZTG) zeitlich gesteuerte Echtzeituhr (RTC),
- eine Vergleichseinrichtung (VE) zum Vergleichen einer empfangenen Zeitinformation (ZI1, ZI2) mit einem von der Echtzeituhr (RTC) angegebenen, aktuellen Zeitwert (ZR),
- eine Taktfrequenzsteuerung (TS1) zum Steuern der Taktfrequenz des Zeittaktgebers (ZTG) in Abhängigkeit vom Vergleichsergebnis der Vergleichseinrichtung (VE),
- einen Eingangspufferspeicher (EP) zum Puffern eines über das Kommunikationsnetz (KN) empfangenen Datenstroms, wobei ein Auslesen von Datenelementen des Datenstroms aus dem Eingangspufferspeicher (EP) durch die Taktfrequenz des Zeittaktgebers (ZTG) bestimmt wird,
- eine Füllstandserfassungseinrichtung zum Erfassen des Füllstandes des Eingangspufferspeichers (EP) sowie
- eine Taktfrequenzsteuerung (TS2) zum Nachregeln der Taktfrequenz des Zeittaktgebers (ZTG) in Abhängigkeit vom erfaßten Füllstand.

2. System nach Anspruch 1,
**dadurch gekennzeichnet,**
**daß** der Zeittaktgeber (ZTG) einer Kommunikationssystemkomponente (EAGA, EAGB) temperaturstabilisiert oder temperaturkompensiert ist.

3. System nach Anspruch 1 oder 2,
**dadurch gekennzeichnet,**
**daß** der Zeittaktgeber (ZTG) durch einen den Zeittakt (T) ausgebenden Arbeitsoszillator und einen temperaturstabilisierten oder temperaturkompensierten, die Taktfrequenz des Arbeitsoszillators regelnden und ansonsten freilaufenden Referenzoszillator realisiert ist.

4. System nach einem der vorhergehenden Ansprüche,
**dadurch gekennzeichnet,**
**daß** die Zeitinformations-Empfangseinrichtung (EE) einer Kommunikationssystemkomponente (EAGA, EAGB) eine Funkempfangseinrichtung zum drahtlosen Empfangen einer Zeitinformation (ZI1, ZI2) vom Zeitinformationsgeber aufweist.

5. System nach einem der Ansprüche 1 bis 3,
**dadurch gekennzeichnet,**
**daß** die Zeitinformations-Empfangseinrichtung (EE) einer Kommunikationssystemkomponente (EAGA, EAGB) über eine Netzwerkschnittstelle (NS) an das Kommunikationsnetz (KN) gekoppelt ist und
Mittel (NP) zum Extrahieren einer Zeitinformation (ZI1, ZI2) aus einem über das Kommunikationsnetz (KN) zur Kommunikationssystemkomponente (EAGA, EAGB) übermittelten Datenstrom aufweist.

6. System nach Anspruch 5,
**dadurch gekennzeichnet,**
**daß** die Kommunikationssystemkomponenten (EAGA, EAGB) jeweils eine Zeitabfrageeinrichtung (TS1) zum Anfordern einer Zeitinformation vom Zeitinformationsgeber (ZIG) aufweisen.

7. System nach Anspruch 6,
**dadurch gekennzeichnet,**
**daß** die Kommunikationssystemkomponenten (EAGA, EAGB) jeweils
- eine Zeitmeßeinrichtung zum Messen der Zeitdifferenz zwischen Anforderung und Empfang einer Zeitinformation (ZI1, ZI2),
- eine Laufzeitbestimmungseinrichtung (LB) zum Ermitteln eines Schätzwertes für die Laufzeit der Zeitinformation (ZI1, ZI2) vom Zeitinformationsgeber (ZIG) zur jeweiligen Kommunikationssystemkomponente anhand der gemessenen Zeitdifferenz, sowie
- eine Vergleichseinrichtung (VE) zum Vergleichen einer empfangenen Zeitinformation (ZI1, ZI2) mit einem von der Echtzeituhr (RTC) angegebenen, aktuellen Zeitwert (ZR) unter Berücksichtigung der abgeschätzten Laufzeit aufweisen.

8. System nach Anspruch 7,
**dadurch gekennzeichnet,**
**daß** die Zeitmeßeinrichtung mittels der Echtzeituhr (RTC) realisiert ist.

9. System nach Anspruch 7 oder 8,
**gekennzeichnet durch**,
eine Laufzeitbestimmungseinrichtung (LB) zum Ermitteln des Schätzwertes für die Laufzeit anhand einer Mittelung über mehrere gemessene Zeitdifferenzen oder daraus abgeleitete Größen.

10. System nach einem der Ansprüche 6 bis 9,
**gekennzeichnet durch**
eine Zeitabfrageeinrichtung (TS1) zum Anfordern von Zeitinformationen (ZI1, ZI2) in Zeitabständen, die davon abhängen, wie stark die gemessenen Zeitdifferenzen variieren.

11. System nach einem der Ansprüche 6 bis 10,
**gekennzeichnet durch**
eine Zeitabfrageeinrichtung (TS1) zum Anfordern von Zeitinformationen (ZI1, ZI2) in vom Vergleichsergebnis der Vergleichseinrichtung abhängigen Zeitabständen.

12. System nach einem der vorhergehenden Anspüche,
**dadurch gekennzeichnet,**
**daß** der zu puffernde Datenstrom über das Kommunikationsnetz empfangene Kommunikationsnutzdaten (KD) umfaßt.

13. System nach einem der vorhergehenden Ansprüche,
**dadurch gekennzeichnet,**
**daß** der Zeitinformationsgeber (ZIG) eine Detektoreinrichtung zum Feststellen eines temporär geringen Übertragungsaufkommens des Kommunikationsnetzes (KN) und
eine Übertragungssteuerung zum Auslösen einer Übertragung einer Zeitinformation (ZI1, ZI2) bei festgestelltem geringen Übertragunsaufkommen aufweist.

14. System nach einem der vorhergehenden Ansprüche,
**dadurch gekennzeichnet,**
**daß** die Kommunikationssystemkomponenten (EAGA, EAGB) jeweils eine PLL-Schaltung zum Regeln der Taktfrequenz des Zeittaktgebers (ZTG) aufweisen.

## Claims

1. System for synchronizing communications system components (EAGA, EAGB) of the system which are coupled via a communications network (KN), having
a time information transmitter (ZIG) for transmitting time information (ZI1, ZI2) relating to the communications system components (EAGA, EAGB), where the communications systems components (EAGA, EAGB) each have
- a time information reception device (EE) for receiving time information from the time information transmitter (ZIG),
- a clock generator (ZTG) with a controllable clock frequency for prescribing a transmission data rate for communication data (KD) which are to be transmitted,
- a real time clock (RTC) whose timing is controlled by the clock generator (ZTG),
- a comparison device (VE) for comparing received time information (ZI1, ZI2) with a current time value (ZR) indicated by the real time clock (RTC),
- a clock frequency controller (TS1) for controlling the clock frequency of the clock generator (ZTG) on the basis of the comparison result from the comparison device (VE),
- an input buffer (EP) for buffering a data stream received via the communications network (KN), where reading of data elements in the data stream from the input buffer (EP) is determined by the clock frequency of the clock generator (ZTG),
- a filling level detection device for detecting the filling level of the input buffer (EP), and
- a clock frequency controller (TS2) for readjusting the clock frequency of the clock generator (ZTG) on the basis of the detected filling level.

2. System according to Claim 1,
**characterized**
**in that** the clock generator (ZTG) in a communications system component (EAGA, EAGB) is temperature-stabilized or temperature-compensated.

3. System according to Claim 1 or 2,
**characterized**
**in that** the clock generator (ZTG) is produced by a main oscillator outputting the timing pulse (T) and by a temperature-stabilized or temperature-compensated reference oscillator which regulates the clock frequency of the main oscillator and otherwise freewheels.

4. System according to one of the preceding claims,
**characterized**
**in that** the time information reception device (EE) in a communications system component (EAGA, EAGB) has a radio reception device for wireless reception of time information (ZI1, ZI2) from the time information transmitter.

5. System according to one of Claims 1 to 3,
**characterized**
**in that** the time information reception device (EE) in a communications system component (EAGA, EAGB) is coupled to the communications network (KN) via a network interface (NS), and has means (NP) for extracting time information (ZI1, ZI2) from a data stream transmitted to the communications system component (EAGA, EAGB) via the communications network (KN).

6. System according to Claim 5,
**characterized**
**in that** the communications system components (EAGA, EAGB) each have a time request device (TS1) for requesting time information from the time information transmitter (ZIG).

7. System according to Claim 6,
**characterized**
**in that** the communications system components (EAGA, EAGB) each have
- a timing device for measuring the time difference between a request for and reception of time information (ZI1, ZI2),
- a delay time determination device (LB) for ascertaining an estimate of the delay time for the time information (ZI1, ZI2) from the time information transmitter (ZIG) to the respective communications system component on the basis of the measured time difference, and
- a comparison device (VE) for comparing received time information (ZI1, ZI2) with a current time value (ZR) indicated by the real time clock (RTC), taking into account the estimated delay time.

8. System according to Claim 7,
**characterized**
**in that** the timing device is produced using the real time clock (RTC).

9. System according to Claim 7 or 8,
**characterized by**
a delay time determination device (LB) for ascertaining the estimate of the delay time on the basis of averaging over a plurality of measured time differences or variables derived therefrom.

10. System according to one of Claims 6 to 9,
**characterized by**
a time request device (TS1) for requesting time information (ZI1, ZI2) at time intervals which are dependent on how greatly the measured time differences vary.

11. System according to one of Claims 6 to 10,
**characterized by**
a time request device (TS1) for requesting time information (ZI1, ZI2) at time intervals which are dependent on the comparison result from the comparison device.

12. System according to one of the preceding claims,
**characterized**
**in that** the data stream to be buffered comprises communications user data (KD) received via the communications network.

13. System according to one of the preceding claims,
**characterized**
**in that** the time information transmitter (ZIG) has a detector device for ascertaining a temporarily low transmission volume in the communications network (KN), and
a transmission controller for triggering transmission of time information (ZI1, ZI2) when a low transmission volume is ascertained.

14. System according to one of the preceding claims,
**characterized**
**in that** the communications system components (EAGA, EAGB) each have a PLL circuit for regulating the clock frequency of the clock generator (ZTG).

## Revendications

1. Système de synchronisation de composants de système de communication (EAGA, EAGB) du système couplés par l'intermédiaire d'un réseau de communication (KN), comprenant
un générateur d'informations de temps (ZIG) destiné à transmettre des informations de temps (ZI1, ZI2) aux composants de système de communication(EAGA, EAGB), les composants de système de communication (EAGA, EAGB) présentant respectivement :
- un dispositif de réception (EE) d'informations de temps pour la réception d'une information de temps du générateur d'informations de temps (ZIG),
- un générateur d'impulsions d'horloge (ZTG) à fréquence d'horloge réglable, destiné à indiquer un débit de données de transmission pour des données de communication (KD) à transmettre,
- une horloge en temps réel (RTC) commandée temporellement par le générateur d'impulsions d'horloge (ZTG),
- un dispositif de comparaison (VE) destiné à comparer une information de temps (ZI1, ZI2) reçue à une valeur de temps (ZR) momentanée, indiquée par l'horloge en temps réel (RTC),
- une commande de fréquence d'horloge (TS1) destinée à commander la fréquence d'horloge du générateur d'impulsions d'horloge (ZTG) en fonction du résultat de comparaison du dispositif de comparaison (VE),
- une mémoire tampon d'entrée (EP) destinée à la mise en mémoire tampon d'un flux de données reçu par l'intermédiaire du réseau de communication (KN), une lecture d'éléments de données du flux de données à partir de la mémoire tampon d'entrée (EP) étant déterminée au moyen de la fréquence d'horloge du générateur d'impulsions d'horloge (ZTG),
- un dispositif d'enregistrement du niveau de remplissage destiné à enregistrer le niveau de remplissage de la mémoire tampon d'entrée (EP) ainsi
- qu'une commande de fréquence d'horloge (TS2) destinée au réajustage de la fréquence d'horloge du générateur d'impulsions d'horloge (ZTG) en fonction du niveau de remplissage enregistré.

2. Système selon la revendication 1,
**caractérisé en ce**
**que** le générateur d'impulsions d'horloge (ZTG) d'un composant de système de communication (EAGA, EAGB) est stabilisé en température ou compensé en température.

3. Système selon la revendication 1 ou 2,
**caractérisé en ce**
**que** le générateur d'impulsions d'horloge (ZTG) est réalisé au moyen d'un oscillateur de travail sortant l'impulsion d'horloge (T) et au moyen d'un oscillateur de référence stabilisé en température ou compensé en température, réglant la fréquence d'horloge de l'oscillateur de travail et sinon marchant librement.

4. Système selon l'une quelconque des revendications précédentes,
**caractérisé en ce**
**que** le dispositif de réception (EE) d'informations de temps d'un composant de système de communication (EAGA, EAGB) présente un dispositif de réception radio pour la réception sans fil d'une information de temps (ZI1, ZI2) du générateur d'informations de temps.

5. Système selon l'une quelconque des revendications 1 à 3,
**caractérisé en ce**
**que** le dispositif de réception (EE) d'informations de temps d'un composant de système de communication (EAGA, EAGB) est couplé au réseau de communication (KN) par l'intermédiaire d'une interface de réseau (NS) et
présente des moyens (NP) pour extraire une information de temps (ZI1, ZI2) d'un flux de données transmis au composant de système de communication (EAGA, EAGB) par l'intermédiaire du réseau de communication (KN).

6. Système selon la revendication 5,
**caractérisé en ce**
**que** les composants de système de communication (EAGA, EAGB) présentent respectivement un dispositif d'interrogation de temps (TS1) pour demander une information de temps du générateur d'informations de temps (ZIG).

7. Système selon la revendication 6,
**caractérisé en ce**
**que** les composants de système de communication (EAGA, EAGB) présentent respectivement
- un dispositif de mesure du temps destiné à mesurer la différence de temps entre la demande et la réception d'une information de temps (ZI1, ZI2),
- un dispositif de détermination du temps de propagation (LB) destiné à déterminer une valeur d'estimation pour le temps de propagation de l'information de temps (ZI1, ZI2) du générateur d'informations de temps (ZIG) vers le composant respectif de système de communication à l'aide de la différence de temps mesurée, ainsi qu'
- un dispositif de comparaison (VE) destiné à comparer une information de temps (ZI1, ZI2) reçue à une valeur de temps (ZR) momentanée, indiquée par l'horloge en temps réel (RTC), en tenant compte du temps de propagation estimé.

8. Système selon la revendication 7,
**caractérisé en ce**
**que** le dispositif de mesure de temps est réalisé au moyen de l'horloge en temps réel (RTC).

9. Système selon la revendication 7 ou 8,
**caractérisé par**
un dispositif de détermination du temps de propagation (LB) destiné à déterminer la valeur d'estimation pour le temps de propagation à l'aide d'une moyenne obtenue à partir de plusieurs différences de temps mesurées ou de grandeurs qui en sont dérivées.

10. Système selon l'une quelconque des revendications 6 à 9,
**caractérisé par**
un dispositif d'interrogation de temps (TS1) destiné à demander des informations de temps (ZI1, ZI2) à intervalles de temps qui dépendent du fait de savoir de combien les différences de temps mesurées varient.

11. Système selon l'une quelconque des revendications 6 à 10,
**caractérisé par**
un dispositif d'interrogation de temps (TS1) destiné à demander des informations de temps (ZI1, ZI2) à intervalles de temps dépendant du résultat de comparaison du dispositif de comparaison.

12. Système selon l'une quelconque des revendications précédentes,
**caractérisé en ce**
**que** le flux de données à mettre en mémoire tampon comprend des données utiles de communication (KD) reçues par l'intermédiaire du réseau de communication.

13. Système selon l'une quelconque des revendications précédentes,
**caractérisé en ce**
**que** le générateur d'informations de temps (ZIG) présente un dispositif de détection destiné à constater un trafic de transmission momentanément moindre du réseau de communication (KN) et
une commande de transmission destinée à déclencher une transmission d'une information de temps (ZI1, ZI2) lorsque le trafic de transmission moindre est constaté.

14. Système selon l'une quelconque des revendications précédentes,
**caractérisé en ce**
**que** les composants (de système de communication EAGA, EAGB) présentent respectivement un circuit PLL pour le réglage de la fréquence d'horloge du générateur d'impulsions d'horloge (ZTG).
